# EUROPEAN PATENT SPECIFICATION

(11) **EP 3 812 257 B1**
(45) Date of publication and mention of the grant of the patent: **02.08.2023**
(21) Application number: 20163977.0
(22) Date of filing: 18.03.2020
(51) Int. Cl.: B62K 21/02, B62K 21/18, B62K 19/32

(54) **NONCIRCULAR STEERER TUBE AND COUPLER**
NICHT KREISFÖRMIGES GABELSCHAFTROHR UND KUPPLUNG
TUBE DE GUIDON DE BICYCLETTE NON CIRCULAIRE ET COUPLEUR

(30) Priority: 25.10.2019 US 201962926069 P; 03.03.2020 US 202016807615
(43) Date of publication of application: 28.04.2021
(73) Proprietor: Cycling Sports Group, Inc., Wilton, Connecticut 06897 (US)
(72) Inventor: RINARD, Damon, Wilton, CT Connecticut 06897 (US); SCHOTTLER, Jonathan, Wilton, CT Connecticut 06897 (US); KUERNER, Denis, Wilton, CT Connecticut 06897 (US)
(74) Representative: Barker Brettell LLP

(56) References cited:
- WO-A1-2015/180756
- US-A1- 2007 170 690
- US-A1- 2018 118 300

## Description

### FIELD OF THE INVENTION

The invention relates to the field of bicycles, and more particularly to the field of fork steerer tubes and expansion plugs.

### BACKGROUND

The standard bicycle may have cables routed externally from the stem or handlebar into the frame. The cable entry location is typically in a region on the frame's external surfaces, although it is desirable to hide cables from view as much as possible. One solution is to create a non-cylindrical steerer tube, providing a volume for several cables to enter the frame between a frame top bearing, and the steerer tube. Some prior designs have included a steerer tube with flat sides or a flat front. These designs have required a sunken top bearing in the frame to allow a path for the cables to smoothly enter the head tube. This is a significant problem on some bicycles, such as those that require a low stack and no headset spacers. Sunken bearings degrade the load path from top bearing to the frame. These solutions also require a bulky headset split ring dust cover to both provide a cable path and to complete the frame silhouette. These prior designs further suffer from various issues with regard to coupling the steerer tube with a conventional handlebar stem.

It will be understood by those skilled in the art that one or more aspects of this invention can meet certain objectives, while one or more other aspects can lead to certain other objectives. Other objects, features, benefits and advantages of the present invention will be apparent in this summary and descriptions of the disclosed embodiment, and will be readily apparent to those skilled in the art. Such objects, features, benefits and advantages will be apparent from the above as taken in conjunction with the accompanying figures and all reasonable inferences to be drawn therefrom.

Related prior art include US2018/118300A1, US2007/170690A1, and WO2015/180756A1.

US2018/118300A1 discloses a bicycle front fork including two extension tubes connected to each other at two respective top ends thereof. A steering tube is connected to a position where the two respective top ends of the two extension tubes are connected. The steering tube has at least one groove defined axially in the outer surface thereof. The at least one groove receives at least one control cable therein. The at least one control cable is hidden when the head tube is installed to the bicycle frame.

US2007/170690A1 discloses an expansion plug for engagement with a circular steerer tube of a bicycle, the expansion plug comprising: a bolt threadably engaged to a lower wedge, such that rotation of the bolt provides longitudinal translation of the lower wedge, the lower wedge having a plurality of angled lower wedge sliding surfaces.

WO2015/180756A1 discloses a bicycle fork comprising a steering tube designed to be rotatably mounted in a head tube of a bicycle frame. At least some sections of the steering tube in the axial direction have a non-circular cross-sectional profile.

### SUMMARY OF THE INVENTION

According to a first aspect of the invention, there is provided an expansion plug for engagement with a noncircular steerer tube of a bicycle, as defined in claim 1.

According to a second aspect of the invention, there is provided an assembly for a bicycle which includes the expansion plug of the first aspect, as defined in claim 7.

Preferred and/or optional features are set out in the dependent claims.

The foregoing and other features of the invention are hereinafter described in greater detail with reference to the accompanying drawings.

### BRIEF DESCRIPTION OF THE DRAWINGS

Embodiments of the invention are disclosed with reference to the accompanying drawings and are for illustrative purposes only. The invention is not limited in application to the details of construction or the arrangement of the components illustrated in the drawings. The invention is capable of other embodiments or of being practiced or carried out in other various ways, within the scope of the appended claims.
**FIG.** 1 is a side view of an exemplary bicycle including embodiments of an exemplary steerer tube and coupler.
**FIG.** 2 is a front perspective view of an exemplary steerer tube connected to a front fork of FIG. 1.
**FIG.** 3 is a front view of the front fork and steerer tube of FIG. 2.
**FIG.** 4 is a top perspective view of the front fork and steerer tube of FIG. 2.
**FIG.** 5 is a front view of an exemplary expansion plug of FIG. 1.
**FIG.** 6 is a rear view of the expansion plug.
**FIG.** 7 is a side view of the expansion plug.
**FIG.** 8 is a rear perspective view of the expansion plug.
**FIG.** 9 is a cross-sectional view taken along line 9-9 of FIG. 6.
**FIG.** 10 is a cross-sectional view taken along line 10-10 of FIG. 7.
**FIG.** 11 is an exploded rear perspective view of the expansion plug.
**FIG.** 12 is a front perspective view of an exemplary upper wedge of the expansion plug.
**FIG.** 13 is a front bottom perspective view of the upper wedge of FIG. 12.
**FIG.** 14 is a front perspective view of exemplary side wedges of the expansion plug.
**FIG.** 15 is a rear perspective view of the side wedges of FIG. 14.
**FIG.** 16 is a top perspective view of the side wedges of FIG. 14.
**FIG.** 17 is a front perspective view of an exemplary bolt of the expansion plug.
**FIG.** 18 is a cross-sectional view taken along line 18-18 of FIG. 17.
**FIG.** 19 is a front perspective view of an exemplary lower wedge of the expansion plug.
**FIG.** 20 is a bottom perspective view of the lower wedge of FIG. 19.
**FIG.** 21 is a close-up perspective view of a front portion of the bicycle of FIG. 1.
**FIG.** 22 is a cross-sectional view taken along line 22-22 of FIG. 21.
**FIG.** 23 is a close-up top view of the bicycle portion of FIG. 21, with the top cap removed for illustrative purposes.
**FIG.** 24 is a close-up top perspective view of the bicycle portion of FIG. 21, with the top cap removed for illustrative purposes.
**FIG.** 25 is a close-up top view of the bicycle portion of FIG. 21, with the top cap and shims removed for illustrative purposes.
**FIG.** 26 is a front view of an exemplary coupler that includes the expansion plug along with a pair of exemplary shims and an exemplary shim ring.
**FIG.** 27 is a front perspective view of the shims of FIG. 26.
**FIG.** 28 is a rear perspective view of the shims of FIG. 26.
**FIG.** 29 is a top view of the shim ring of FIG. 26.

### DETAILED DESCRIPTION

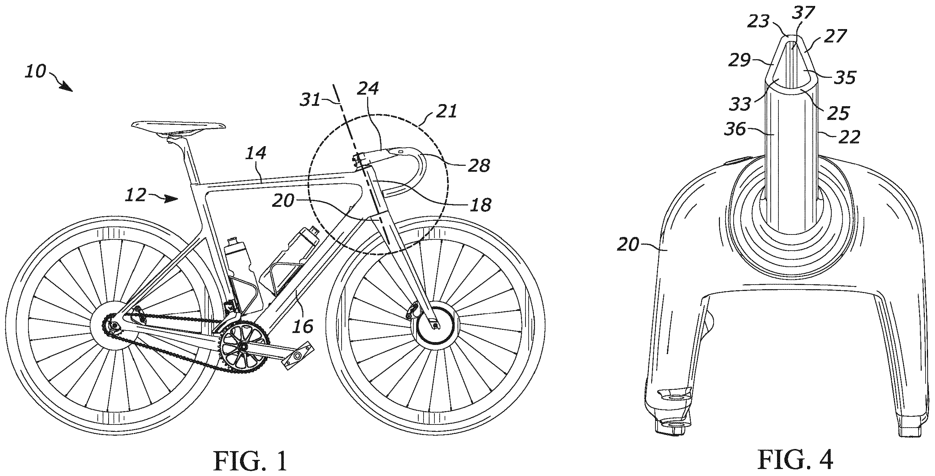

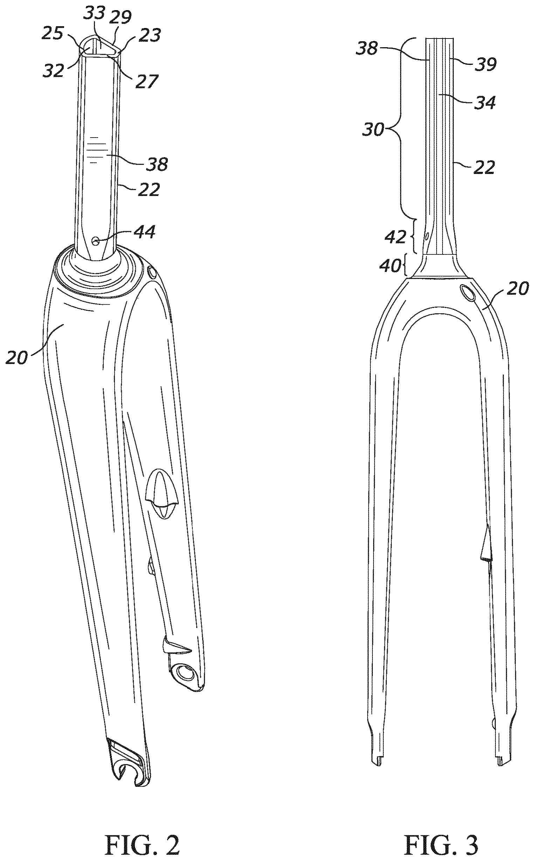

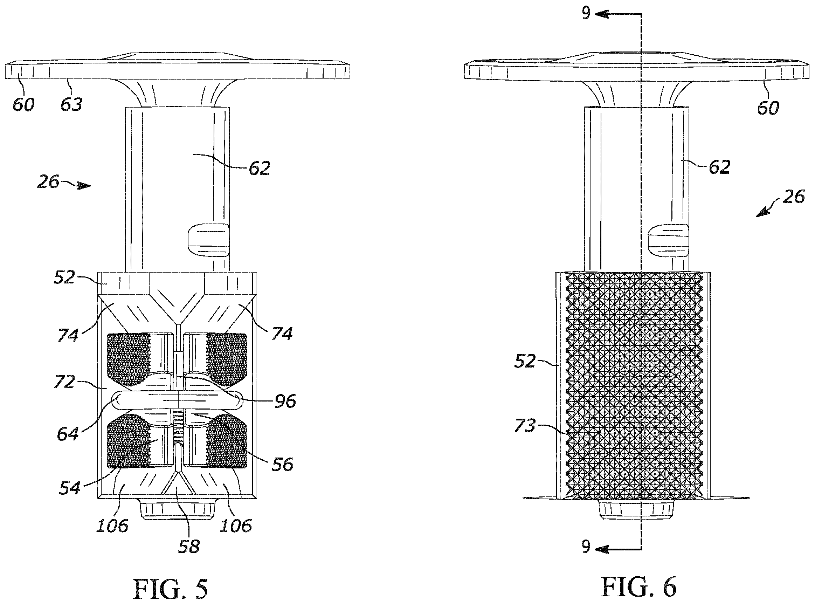

Referring to FIG. 1, an exemplary bicycle 10 is shown, having a frame 12 that includes a top tube 14 interconnected to a down tube 16 at a head tube 18. A front fork 20 is secured to a steerer tube 22 (FIG. 2) that passes through the head tube 18 and is secured to a handlebar stem 24. An expansion plug 26 (FIG. 5) is secured inside the steerer tube 22. The stem 24 is secured to or integrally formed with handlebars 28. A steerer axis 31 extends through the center of the head tube 18.

FIGS. 2-4 illustrate various views of the exemplary front fork 20 and steerer tube 22 from FIG. 1. The steerer tube 22 can be secured to the front fork 20 using any one of various known securing methods, including threaded and press-fit coupling, as well as integral formation of the components. The steerer tube 22 includes an elongated upper portion 30 having a noncircular cross-section, wherein in at leasbolt some embodiments, the noncircular cross-section is generally triangular in shape, and wherein in at least some embodiments, the noncircular cross-section is wider in the rear and narrower in the front, such that the steerer tube 22 tapers as it extends towards the front of the bike. The noncircular cross-sectional shape, in contrast to the typical circular cross-sectional shape, allows for gaps for the passage of cables (brake cables, derailleur cables, etc.) between the steerer tube 22 and the head tube 18.

The steerer tube 22 includes a plurality of walls including a front wall 23, a rear wall 25, and a first side wall 27 and a second side wall 29 extending on opposite sides between the front wall 23 and rear wall 25. The interior surface of the walls include a rear wall inner surface 32, a first side wall inner surface 33, a second side wall inner surface 35, and a front wall inner surface 37, while the exterior of the walls include a front wall outer surface 34, a rear wall outer surface 36, a first side wall outer surface 38 and a second side wall outer surface 39. In at least some embodiments, the side walls 27, 29 can be planar or substantially planar, while in other embodiments, they can include slight to moderate outward or inward curvature. The front wall 23 and rear wall 25 are curved and in at least some embodiments, include a curvature that matches a typical handlebar stem cylindrical inner wall curvature and fork steerer tub diameter, for example 28.6mm diameter, as well as the curvature of a typical headset used for coupling the steerer tube 22 with the head tube 18. As such, in at least some embodiments, the steerer tube 22 can be used with any traditional cylindrical handlebar stem and headset. The steerer tube 22 further includes a lower portion 40 that can be cylindrical, conical, or any other shape as may be convenient to interact with a desired headset and bicycle frame, noting the lower portion 40 has a circular cross-section in at least some embodiments. The lower portion 40 is configured to be secured to or integrally formed with the front fork 20. The steerer tube 22 further includes a middle portion 42 extending between the upper and lower portions, which can include tapering to transition the lower portion shape to the upper portion shape (e.g., circular to noncircular). In addition, one or more cable tunnels 44 can be provided in the lower portion 40 and/or middle portion 42, to allow a cable to pass inside the steerer tube 22 and into the front fork 20.

Utilizing a steerer tube with a noncircular cross-section presents several challenges with regard to coupling with a traditional cylindrical handlebar stem. For example, an expansion plug is commonly used as an internal anchor within a steerer tube to allow the headset top cap to provide compression to a typical headset assembly. In the case of a well-known circular cross-section steerer tube, a known cylindrical expansion plug is utilized, as it provides a generally uniform and self-centered force as it expands inside the steerer tube. Although, the use of a known cylindrical expansion plug would not function properly if used with a steerer tube having a noncircular cross-section for numerous obvious reasons, most notably the force imposed on the steerer tube would be disproportionately dissipated, causing undesirable deformation of the steerer tube, and insufficient securement pressure due to limited contact with the inner walls of the steerer tube. In at least some embodiments, it is desired that the expansion plug be compact, self-contained, self-centering (self-aligning), removable, adjustable, and capable of being tightened to about 4 Nm to provide a high radial force on the steerer tube to act as an anchor to prevent slip and loosening of the headset, without causing damage to the steerer tube.

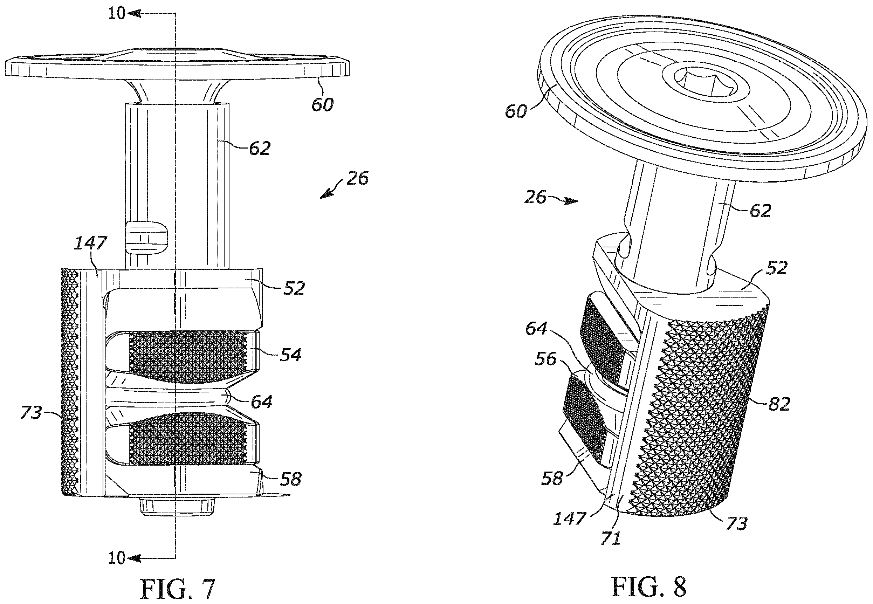

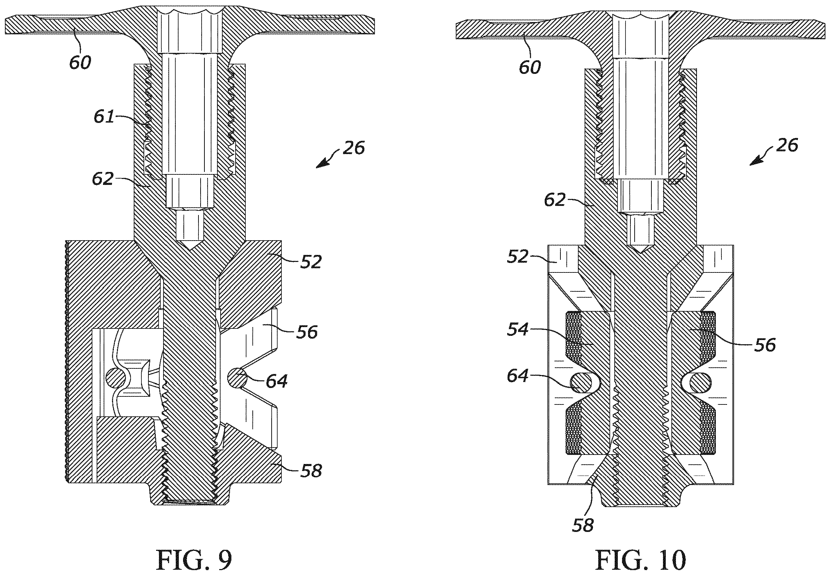

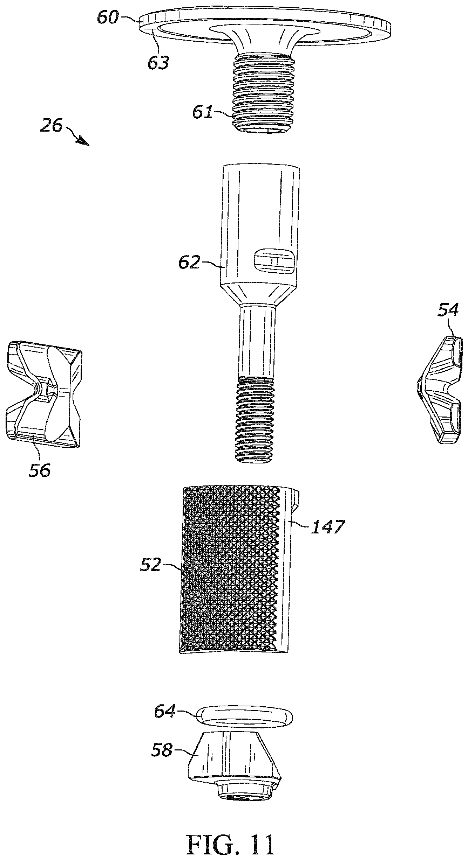

One embodiment of an expansion plug suitable for use with the steerer tube 22 is expansion plug 26. Referring to FIGS. 5-11, the expansion plug 26 is shown in various exemplary views, including front, back, side, perspective, cross-sectional and exploded views. In at least some embodiments, the expansion plug 26 includes an upper wedge 52, a first side wedge 54, a second side wedge 56, a lower wedge 58, a headset top cap 60, a bolt 62, and a flexible fastener 64.

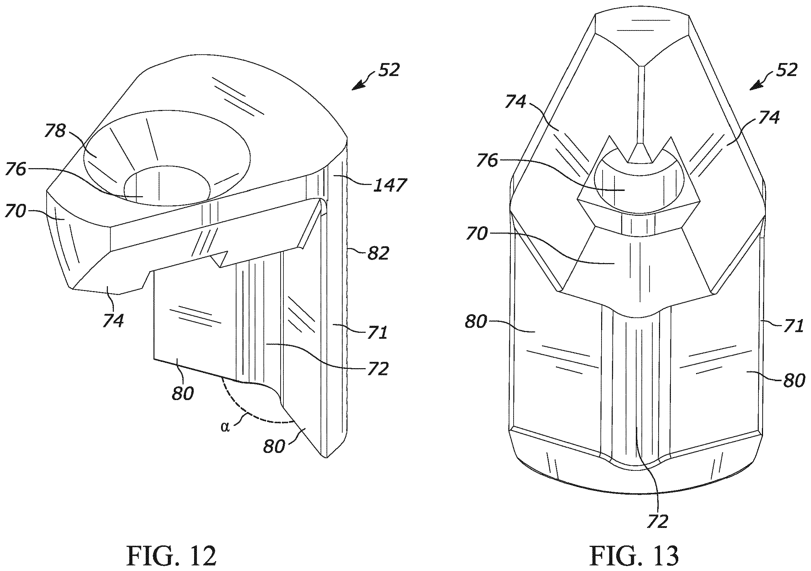

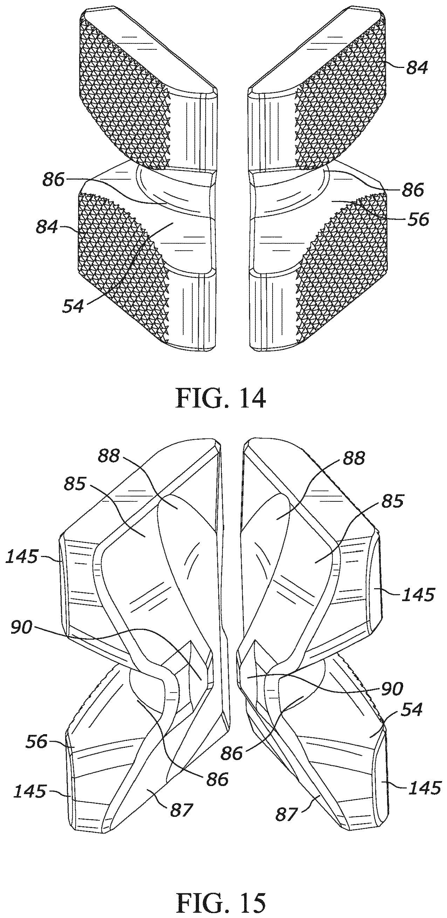

Referring to FIGS. 12-13, in at least some embodiments, the upper wedge 52 includes a forward tapering upper wedge head 70 extending substantially perpendicularly from an elongated upper wedge body 71. The upper wedge body 71 includes a wedge body inner wall 72 and a wedge body outer wall 73. The upper wedge head 70 includes a plurality of angled upper wedge sliding surfaces 74, as well as a bolt aperture 76 and conical interface 78 for receiving the bolt 62. The wedge body inner wall 72 incudes a plurality of longitudinal planar body sliding surfaces 80, which in at least some embodiments, are situated at an angle α with respect to each other. Angle α can include any one of various angles, although in at least some embodiments, angle α can be an obtuse angle, while in other embodiments angle α can be a reflex angle.
Referring to FIGS. 14-16, various exemplary views of the side wedges 54, 56 are provided. For illustrative purposes, the views show the side wedges 54, 56 as they would be relatively positioned when coupled within the expansion plug 26. Each side wedge 54, 56 includes an outer wedge surface 84 configured to engage (during expansion of the expansion plug 26) the side wall inner surfaces 33, 35 of the steerer tube 22. In at least some embodiments, each outer wedge surface 84 is interrupted by a radially inward extending ring groove 86 configured to receive and at least partially secure the flexible fastener 64 therearound, wherein in at least some embodiments, the flexible fastener 64 can include a rubber O-ring, or another expandable and contractible type of fastener. Each side wedge 54, 56 further includes an upper inner wedge wall 85 and a lower inner wedge wall 87, wherein the upper inner wedge walls 85 are angled to complimentarily engage the upper wedge sliding surfaces 74 of the upper wedge 52, and the lower inner wedge walls 87 are angled to complimentarily engage the lower wedge sliding surfaces 106 of the lower wedge 58. In addition, in at least some embodiments, each side wedge 54, 56 includes a vertically extending bolt channel 88 sized and shaped to at least partially encircle the bolt 62. As noted above, the flexible fastener 64 pre-assembles around the side wedges 54, 56. This provides compression of the various parts and keeps them located about the bolt 62 (and steerer axis). However, due to the forward tapering shape of the lower wedge sliding surfaces 106 and the upper wedge sliding surfaces 74, along with the added compression of the flexible fastener 64, the side wedges 54, 56 are inclined to naturally slide forward. As such, in at least some embodiments, extra thickness and a wing portion 90 can be included on each side wedge 54, 56 to extend the circumference of the bolt channel 88 and assist with maintaining positioning of the side wedges 54, 56 about the bolt 62 during expansion by limiting or preventing forward translation relative to the bolt 62. In addition, the friction coefficient between the mating surfaces of the expansion plug 26 and the inner walls of the steerer tube 22 should be high, as such, in at least some embodiments, outer wedge surface 84 of the side wedges 54, 56, as well as a wedge body outer wall surface 82, can include a knurled, sandblasted, or otherwise textured surface finish.

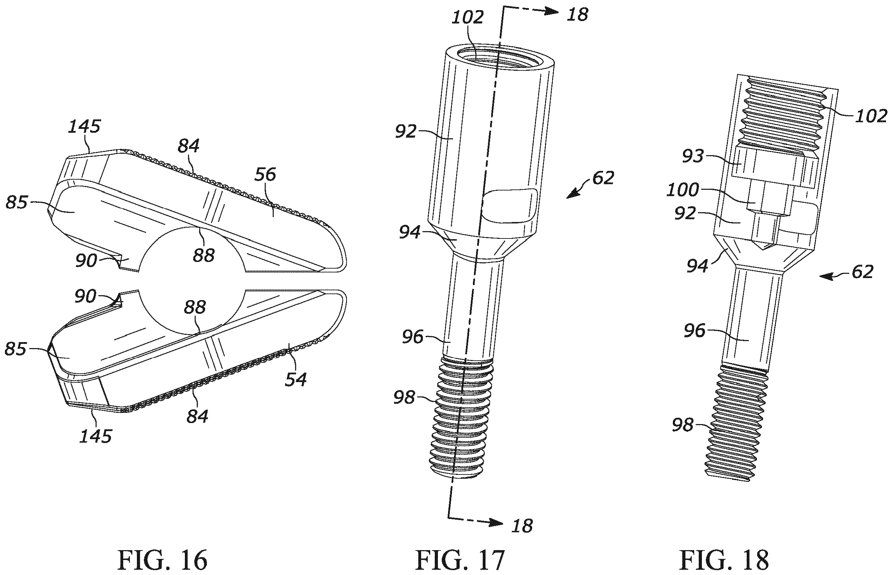

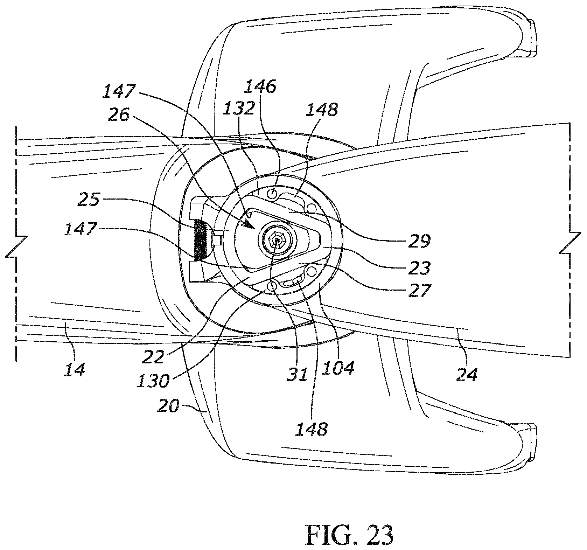

Referring to FIGS. 17-18, exemplary perspective and cross-sectional views of the bolt 62 are provided. The bolt 62 serves as a central spine of the expansion plug 26 and includes an upper shaft portion 92 that transitions via a tapered portion 94 to a lower shaft portion 96, the lower shaft portion 96 including shaft threads 98 extending along a length thereof. In at least some embodiments, the upper shaft portion 92 is at least partially hollow and includes an engagement portion 100 to engage a tool (e.g., a hex wrench) for rotating the bolt 62, wherein rotation of the bolt 62 serves to further install the expansion plug 26 within the steerer tube 22, as discussed in detail below. In at least some embodiments the engagement portion 100 can take the form of a hex-shaped channel. Further, the upper shaft portion 92 includes internal threads 102 to threadably receive the headset top cap 60, wherein a flange portion 63 of the top cap 60 is configured to abut a stem top surface 104 (FIG. 23) when adjusting pre-load. In at least some embodiments, when the expansion plug 26 is installed in the steerer tube 22, the bolt 62 is centered on the steerer axis 31.

Typical headset assembly components, such as bearings, cups, split-rings, etc. are well known and can be utilized in combination with one or more embodiments described herein. The headset top cap 60 is used to provide pre-load to a headset assembly. This is accomplished by first threading cap threads 61 of the headset top cap 60 into the internal threads 102 of the bolt 62, and then putting the expansion plug 26 into tension by continued rotation of the headset top cap 60 to create pre-load as the flange portion 63 of the top cap abuts the stem top surface 104. To prevent damage of the headset top cap 60 by over-threading, a flat-face hard stop 93 (FIG. 18) can be provided on the bolt 62. This hard stop can prevent over-threading and damage to the bolt 62 and the headset top cap 60.

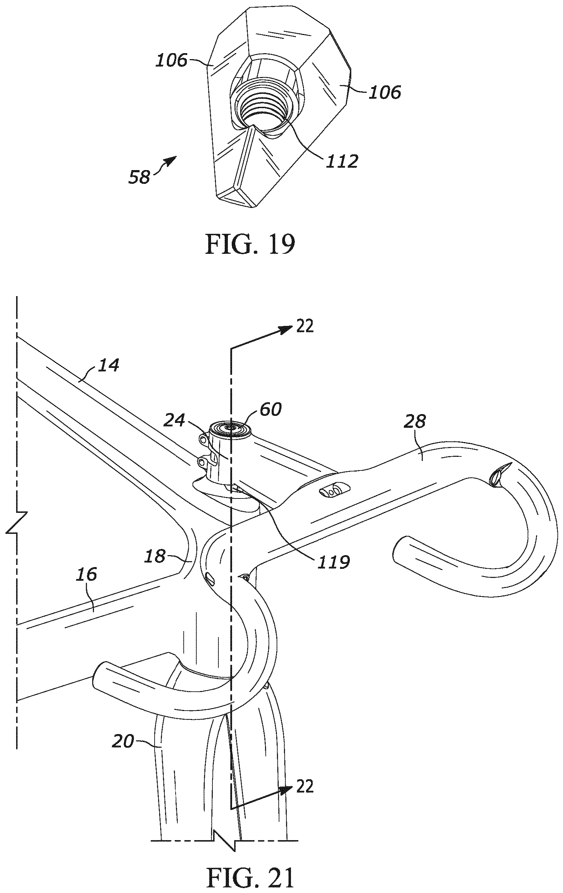

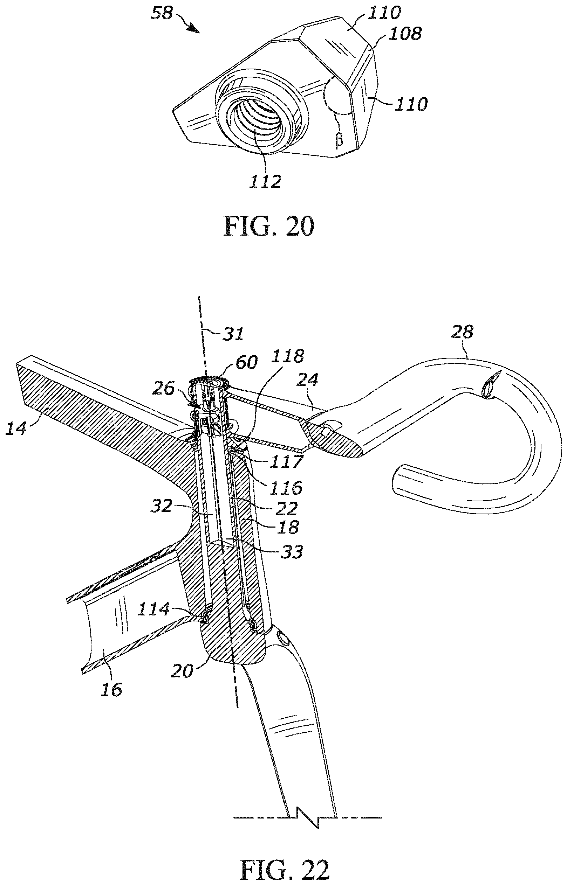

Referring to FIGS. 19-20, exemplary top and bottom perspective views of the lower wedge 58 are provided. The lower wedge 58 includes a plurality of angled lower wedge sliding surfaces 106, as well as a lower wedge rear wall 108 that includes a plurality of angled wall portions 110. In at least some embodiments, the lower wedge rear wall 108 is configured such that the angled wall portions 110 are complimentary with the body sliding surfaces 80 found on the wedge body inner wall 72 of the upper wedge 52. More particularly, in at least some embodiments, the lower wedge rear wall 108 includes two adjacent angled wall portions 110, wherein the angle β (as drawn between the wall portions 110 in FIG. 20) is the same or substantially the same as the angle α, to allow for fitted coupling as the lower wedge 58 translates upwards along the wedge body inner wall 72. The lower wedge 58 further includes coupling threads 112 for engagement with the shaft threads 98 of the bolt 62. In at least some embodiments, such as shown, the lower wedge 58 can taper as it extends forward from the lower wedge rear wall 108.

Referring again to FIG. 5, when the expansion plug 26 is assembled, the side wedges 54, 56 are positioned between the upper wedge sliding surfaces 74 and the lower wedge sliding surfaces 106, and on opposing sides of the lower shaft portion 96 of the bolt 62, and held in place by the flexible fastener 64, which encircles the side wedges 54, 56 and the bolt 62. The bolt 62 extends through the bolt aperture 76 in the upper wedge 52, with the tapered portion 94 positioned inside the conical interface 78, and the shaft threads 98 engaged with the coupling threads 112 of the lower wedge 58. The wall portions 110 on the lower wedge rear wall 108 abut the body sliding surfaces 80 of the upper wedge body 71 to keep the lower wedge 58 substantially perpendicular to the upper wedge body 71 during upward translation. The aforementioned coupled configuration allows for the expansion plug 26 to be easily inserted into the steerer tube 22 and then expanded as desired.

Referring now to FIG. 21, a close up perspective view of a front portion 21 of the bicycle 10 of FIG. 1 is illustrated. For illustrative purposes, various well-known general components, such as tires, wheels, brakes, etc. shown on the bicycle 10 in FIG. 1 are not shown. FIG. 22 provides a cross-sectional view of the front portion 21, further illustrating the expansion plug 26 inserted inside the steerer tube 22, as well as various headset components, such as a lower bearing assembly 114, an upper bearing assembly 116, a split ring 117 and a stem spacer 118 (which can include a plurality of spacer cable passages 119 that extend through the stem spacer 118). In at least some embodiments, with the expansion plug 26 inserted inside the steerer tube 22, the bolt 62 is turned clock-wise (via a tool engaged with the engagement portion 100) (or counter-clock-wise for a left hand thread) where the threaded engagement between the bolt 62 and the lower wedge 58 causes the lower wedge 58 to translate upward towards the upper wedge head 70. This results in the lower wedge sliding surfaces 106 pushing against the lower inner wedge walls 87, and upper wedge sliding surfaces 74 pushing against the upper inner wedge walls 85, causing the side wedges 54, 56 to be displaced and move radially outward with respect to the bolt 62. Continued rotation of the bolt 62 causes the side wedges 54, 56 to respectively abut the side wall inner surfaces 33, 35, and the wedge body outer wall surface 82 of the upper wedge 52 to firmly abut the rear wall inner surface 32, thereby creating outward pressure against the walls of the steerer tube 22. The conical interface 78 between the upper wedge 52 and the bolt 62 can serve to constrain all degrees of freedom except for rotation about the steerer axis 31 to perform self-centering, as well as to eliminate or substantially eliminate bending/shear loads on the bolt 62 to prevent slip inside the steerer tube 22 during expansion.

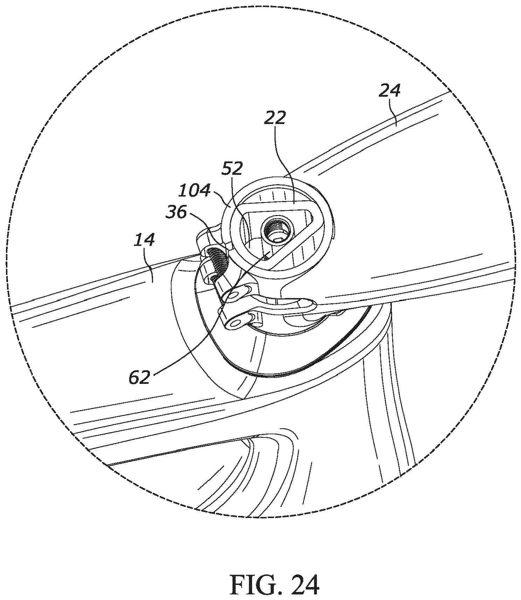

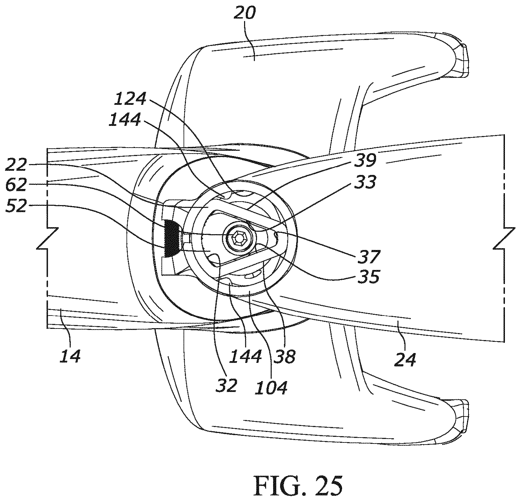

FIGS. 23-24 provide a close-up top view and top perspective view taken from FIG. 21, but with the top cap 60 removed for illustrative purposes. FIG. 25 provides the same view as FIG. 23, but with a pair of shims also removed for illustrative purposes. Referring to FIG. 25, the stem 24, like a typical handlebar stem, includes a cylindrical stem inner wall 124. As best seen in FIG. 25, with the stem 24 installed on the upper portion 30 of the steerer tube 22, the front wall 23 and the rear wall 25 of the steerer tube 22 are sized and shaped to closely fit with the stem inner wall 124 via substantially mating geometry. More particularly, the front wall 23 and the rear wall 25 can include the same curvature found in the stem inner wall 124, such that the upper portion 30 of the steerer tube 22 can provide a substantial abutment with the stem inner wall 124. In at least some embodiments, where the stem inner wall 124 can be non-cylindrical, the front wall 23 and the rear wall 25 can be modified to fit accordingly.

Although the front wall outer surface 34 and the rear wall outer surface 36 can be in abutment with the stem inner wall 124, the non-circular cross-sectional shape of the upper portion 30 leaves a notable gap between the side walls 27, 29 of the steerer tube 22 and the stem inner wall 124. In at least some embodiments, this issue can be addressed by the use of shims (e.g., shims 130, 132). As seen in FIGS. 23-24, the shims 130, 132 can substantially fill the gap between the side walls 27, 29 and the stem inner wall 124. The shims 130, 132 also serve to transmit compression loads between the stem inner wall 124 and the side walls 27, 29.

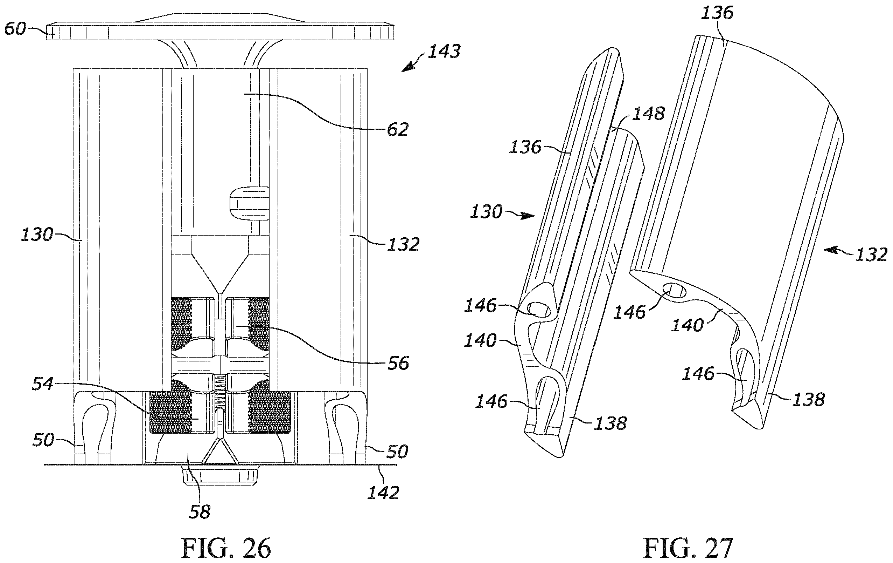

The shims 130, 132, along with a shim ring 142, in combination with the expansion plug 26 form a coupler 143, as shown in FIG. 26. To illustrate the relative positioning of the shims 130, 132, and shim ring 142, FIG. 26 illustrates the expansion plug 26 of FIG. 5 with first shim 130 and second shim 132 positioned therearound, and the shim ring 142 positioned underneath to support the shims 130, 132 during installation. As shown in FIGS. 27-28, each shim 130, 132 includes a shim outer wall 136 having a curvature that in at least some embodiments, corresponds with the curvature of the rear wall 25, as well as a traditional cylindrical handlebar stem inner wall curvature (e.g. the stem inner wall 124), such that the shim outer wall 136 can closely abut the stem inner wall 124 that is not abutted by the steerer tube 22.

In at least some embodiments, the shims 130, 132 can be made of aluminum or a hard GF-plastic creep-resistant composite, although other materials can be utilized in other embodiments. Further, in at least some embodiments, each shim 130, 132 can include a shim leg 138 extending from a shim bottom 140, which is intended to provide clearance under a portion of the shim 130, 132 for the passage of cables. In other embodiments where such clearance is not desired, the shims can extend completely. In at least some embodiments, the shims 130, 132 can include various hollow pockets 146 extending along their length, which can provide weight reduction and serve to relieve strain during compression to provide a more uniform pressure. Further, in at least some embodiments, the shims 103, 132, can include longitudinal cable channels 148 to allow the passage of cables between the stem inner wall 124 and the steerer tube 22.

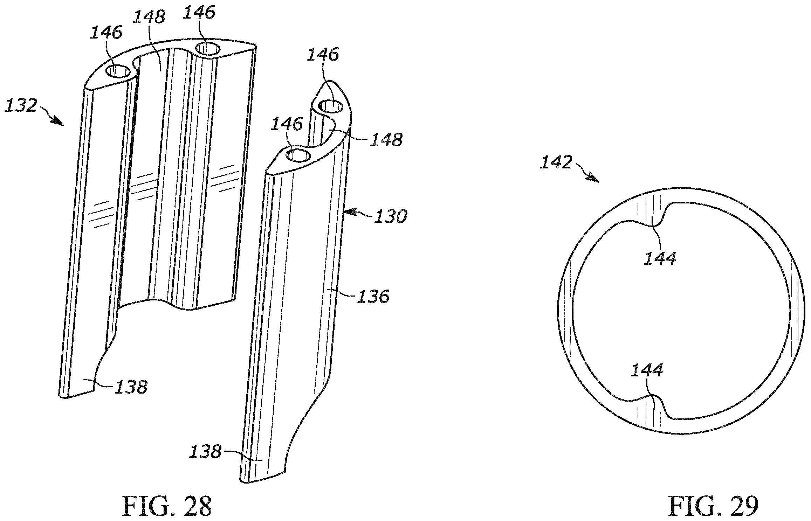

To assist with positioning, the shims 130, 132 rest on the shim ring 142 (FIG. 29). More particularly, in at least some embodiments, the shim ring 142 includes a plurality of ring tabs 144 that extend inward to support the shim leg 138 of each of the shims 130, 132 (see also FIG. 25). In embodiments where shim legs 138 are not utilized, the ring tabs 144 can be extended to completely support the extended bottom of the shims 130, 132. The shim ring 142 can include a substantially matching circumferential curvature to the shims 130, 132 and the stem inner wall 124, such that the shim ring 142 can be positioned under the stem 24 so that the shims 130, 132 rest on the ring tabs 144 and are thus prevented from sliding downwards out of a desired position within the stem 24.

Referring again to FIG. 23, the top view illustrates how the steerer tube 22 and shims 130, 132 are aligned along the stem inner wall 124 to substantially fill the inner circumference. With the expansion plug 26 inserted inside the upper portion 30 of the steerer tube 22, the shim ring 142 under the stem 24, and the shims 130, 132 inserted between the steerer tube 22 and the stem inner wall 124 to rest on the ring tabs 144, the expansion plug 26 can be expanded to complete installation. As noted above, continued rotation of the bolt 62 causes the side wedges 54, 56 to abut the side wall inner surfaces 33, 35, and the wedge body outer wall 73 to forcibly abut the rear wall inner surface 32 of the steerer tube 22, thereby creating outward pressure against the walls of the steerer tube 22.

In at least some embodiments, to prevent or substantially prevent damage to the wall inner surfaces of the steerer tube 22 during expansion of the plug assembly 26, the upper wedge 52 can include chamfered edges (e.g., body chamfered edges 147) extending longitudinally on either side of the elongated upper wedge body 71; in addition, in at least some embodiments, the side wedges 54, 56 can also include chamfered edges (e.g., side wedge chamfered edges 145).

Using the aforementioned expansion plug 26 and the steerer tube 22, the routing of various cables through the head tube area can be accomplished. In at least some embodiments, cables extending from the handlebars 28 can pass into the head tube area through the spacer cable passages 119 (FIG. 21) in the stem spacer 118 resting at the top of the head tube 18. Once inside, the cables can pass downward, below the shims 130, 132 through the shim ring 142 and other headset parts (e.g. split ring 117, upper headset bearing 116) to other portions of the frame 12, such as into the cable tunnel 44 in the steerer tube 22. In at least some embodiments, potential abrasion or wear on the steerer tube from the contact of brake hoses and derailleur housing can be addressed by including a layer of protective material on the outer surface of the steerer tube walls 23, 25, 27, 29.

The steerer tube 22 and expanding plug assembly 26 can be utilized with various bicycle configurations, and as such can be utilized with a variety of front forks, stems, frames, headsets, etc., noting that bicycle 10 is merely one exemplary application and should not be considered limiting. Although the invention has been herein described in what is perceived to be the most practical and preferred embodiments, it is to be understood that the invention is not intended to be limited to the specific embodiments set forth above. Rather, it is recognized that modifications may be made by one of skill in the art of the invention within the scope of the appended claims.

The term "plurality" shall be understood to include one or more. The various aforementioned components can vary in size and shape, as well as in composition, for example, in at least some embodiments, one or more components are comprised of at least one of metal, carbon fiber, plastic, fiberglass, etc., or a combination thereof.

## Claims

1. An expansion plug (26) for engagement with a noncircular steerer tube (22) of a bicycle, the expansion plug comprising:
a bolt (62) threadably engaged to a lower wedge (58), such that rotation of the bolt (62) provides longitudinal translation of the lower wedge (58), the lower wedge (58) having a plurality of angled lower wedge sliding surfaces (106);
a headset top cap (60) threadably securable to the bolt (62);
an upper wedge (52) having a plurality of angled upper wedge sliding surfaces (74) and a bolt aperture (76) for receiving the bolt (62) therethrough;
a plurality of side wedges (54, 56), each side wedge having an angled upper inner wedge wall (85) and an angled lower inner wedge wall (87); and
a flexible fastener (64) positioned around the plurality of side wedges (54, 56) to compress the plurality of side wedges inward towards the bolt (62);
wherein the upper inner wedge walls (85) of the side wedges slidingly abut the upper wedge sliding surfaces (74), and the lower inner wedge walls (87) of the side wedges slidingly abut the lower wedge sliding surfaces (106), such that upward translation of the lower wedge (58) towards the upper wedge (52), via rotation of the bolt (62), provides an outward radial displacement of each side wedge (54, 56) relative to the bolt (62), and downward translation of the lower wedge (58) away from the upper wedge (52), via an opposite rotation of the bolt (62), provides an inward radial displacement of each side wedge (54, 56).

2. The expansion plug of claim 1, wherein the upper wedge (52) further includes a conical interface (78) for receiving a tapered portion of the bolt (62).

3. The expansion plug of claim 1 or of claim 2, wherein each side wedge (54, 56) includes a bolt channel (88) extending along the upper inner wedge wall and the lower inner wedge wall, the bolt channel (88) for at least partially encircling the bolt (62).

4. The expansion plug of claim 3, wherein the plurality of side wedges include a first side wedge (54) and a second side wedge (56).

5. The expansion plug of any preceding claim, wherein the upper inner wedge wall (85) of each side wedge (54, 56) is complimentary to the upper wedge sliding surfaces (74), and the lower inner wedge wall (87) of each side wedge (54, 56) is complimentary to the lower wedge sliding surfaces (106).

6. The expansion plug of any preceding claim, wherein the upper wedge (52) includes an upper wedge body (71) extending from a tapered upper wedge head (70), and wherein the upper wedge body (71) includes body sliding surfaces (80) extending longitudinally along a wedge body inner wall (72), and the lower wedge (58) further includes a lower wedge rear wall (108) having angled wall portions (110) that are complimentary with the body sliding surfaces (80) such that during translation of the lower wedge (58) via rotation of the bolt (62), the lower wedge rear wall (108) slides along the body sliding surfaces (80).

7. An assembly for a bicycle comprising:
a steerer tube (22) configured for insertion in a head tube (18) of a bicycle, the steerer tube (22) comprising:
a lower portion (40) for securement to a bicycle fork (20); and
an elongated upper portion (30) having a front wall (23), a rear wall (25), a first side wall (27), and a second side wall (29), wherein the upper portion (30) has a noncircular cross-section; and
a coupler (143) for engaging the steerer tube (22) with a handlebar stem (24) of the bicycle, the coupler (143) comprising:
an expansion plug (26) as defined in any of claims 1 to 5.

8. The assembly of claim 7, wherein the upper wedge (52) of the expansion plug (26) includes an upper wedge body (71) extending from a tapered upper wedge head (70).

9. The assembly of claim 8, wherein the upper wedge body (71) includes a wedge body inner wall (72) having body sliding surfaces (80) extending longitudinally thereon, and the lower wedge (58) further includes a lower wedge rear wall (108) having angled wall portions (110) that are complimentary with the body sliding surfaces (80) such that during translation of the lower wedge (58) via rotation of the bolt (62), the lower wedge rear wall (108) slides along the body sliding surfaces (80).

10. The assembly of claim 7 as it depends directly or indirectly from claim 4, wherein the lower portion (40) of the steerer tube (22) has a circular cross-section and the steerer tube (22) includes a middle portion (42) extending between the upper portion (30) and lower portion (40), and wherein the middle portion (42) tapers as it extends from the lower portion (40) to the upper portion (30).

11. The assembly of claim 7, or of any preceding claim that depends directly or indirectly from claim 7, wherein the rear wall (25) of the steerer tube (22) has a curvature that is greater than the curvature of the side walls (27, 29) of the steerer tube (22).

12. The assembly of claim 7, or of any preceding claim that depends directly or indirectly from claim 7, wherein the coupler (143) further comprises a plurality of shims (130, 132) positionable between the steerer tube side walls (27, 29) and a stem inner wall of the handlebar stem (24).

13. The assembly of claim 12, wherein the plurality of shims include a first shim (130) and a second shim (132), and wherein each of the first shim and second shim include:
(i) a cable channel (148) to allow for the passage of one or more cables between the first and second side walls and the stem inner wall (124); or
(ii) a shim outer wall (136) having substantially the same curvature as the rear wall (25) of the steerer tube (22).

14. The assembly of claim 13 part (ii), wherein the first shim (130) abuts the first side wall (27) and the second shim (132) abuts the second side wall (29).

15. The assembly of claim 14, wherein the coupler (143) further comprises a shim ring (142) positionable at least partially under the shims (130, 132); and optionally or preferably
wherein each shim includes a shim leg (138) that extends from a shim bottom, and wherein the shim leg rests on the shim ring (142).

## Patentansprüche

1. Spreizdübel (26) für den Eingriff mit einem nicht kreisförmigen Gabelschaftrohr (22) eines Fahrrads, wobei der Spreizdübel umfasst:
einen Bolzen (62), der mit einem unteren Keil (58) im Gewindeeingriff steht, sodass eine Drehung des Bolzens (62) eine Verschiebung des unteren Keils (58) in der Längsrichtung bereitstellt, wobei der untere Keil (58) eine Mehrzahl von abgewinkelten unteren Keilgleitflächen (106) aufweist;
eine Steuersatz-Abdeckkappe (60), die über ein Gewinde an dem Bolzen (62) befestigbar ist;
einen oberen Keil (52), der eine Mehrzahl von abgewinkelten oberen Keilgleitflächen (74) und eine Bolzenöffnung (76) zum Aufnehmen des Bolzens (62) hindurch aufweist;
eine Mehrzahl von Seitenkeilen (54, 56), wobei jeder Seitenkeil eine abgewinkelte obere Keilinnenwand (85) und eine abgewinkelte untere Keilinnenwand (87) aufweist; und
ein flexibles Befestigungselement (64), positioniert um die Mehrzahl von Seitenkeilen (54, 56) herum, um die Mehrzahl von Seitenkeilen nach innen in Richtung des Bolzens (62) zusammenzudrücken;
wobei die oberen Keilinnenwände (85) der Seitenkeile gleitend an den oberen Keilgleitflächen (74) zur Anlage kommen und die unteren Keilinnenwände (87) der Seitenkeile gleitend an den unteren Keilgleitflächen (106) zur Anlage kommen, sodass eine Verschiebung des unteren Keils (58) zu dem oberen Keil (52) hin nach oben, durch Drehung des Bolzens (62), eine Verlagerung jedes Seitenkeils (54, 56) radial nach außen in Bezug auf den Bolzen (62) bereitstellt und eine Verschiebung des unteren Keils (58) von dem oberen Keil (52) weg nach unten, durch eine entgegengesetzte Drehung des Bolzens (62), eine Verlagerung jedes Seitenkeils (54, 56) radial nach innen bereitstellt.

2. Spreizdübel nach Anspruch 1, wobei der obere Keil (52) ferner eine konische Schnittstelle (78) zum Aufnehmen eines verjüngten Abschnitts des Bolzens (62) aufweist.

3. Spreizdübel nach Anspruch 1 oder nach Anspruch 2, wobei jeder Seitenkeil (54, 56) einen Bolzenkanal (88) aufweist, der sich entlang der oberen Keilinnenwand und der unteren Keilinnenwand erstreckt, wobei der Bolzenkanal (88) dafür vorgesehen ist, den Bolzen (62) zumindest teilweise zu umgeben.

4. Spreizdübel nach Anspruch 3, wobei die Mehrzahl von Seitenkeilen einen ersten Seitenkeil (54) und einen zweiten Seitenkeil (56) aufweist.

5. Spreizdübel nach einem der vorstehenden Ansprüche, wobei die obere Keilinnenwand (85) jedes Seitenkeils (54, 56) mit den oberen Keilgleitflächen (74) komplementär ist und die untere Keilinnenwand (87) jedes Seitenkeils (54, 56) mit den unteren Keilgleitflächen (106) komplementär ist.

6. Spreizdübel nach einem der vorstehenden Ansprüche, wobei der obere Keil (52) einen oberen Keilkörper (71) aufweist, der sich von einem verjüngten oberen Keilkopf (70) erstreckt, und wobei der obere Keilkörper (71) Körpergleitflächen (80) aufweist, die sich in der Längsrichtung entlang einer Keilkörperinnenwand (72) erstrecken, und wobei der untere Keil (58) ferner eine untere Keilrückwand (108) mit abgewinkelten Wandabschnitten (110) aufweist, die mit den Körpergleitflächen (80) komplementär sind, sodass bei einer Verschiebung des unteren Keils (58), durch Drehung des Bolzens (62), die untere Keilrückwand (108) entlang der Körpergleitflächen (80) gleitet.

7. Baugruppe für ein Fahrrad, umfassend:
ein Gabelschaftrohr (22), konfiguriert zur Einführung in einen Steuerkopf (18) eines Fahrrads, wobei das Gabelschaftrohr (22) umfasst:
einen unteren Abschnitt (40) zur Befestigung an einer Fahrradgabel (20); und
einen langgestreckten oberen Abschnitt (30) mit einer Vorderwand (23), einer Rückwand (25), einer ersten Seitenwand (27) und einer zweiten Seitenwand (29), wobei der obere Abschnitt (30) einen nicht kreisförmigen Querschnitt aufweist; und
eine Kupplung (143) zum Bringen des Gabelschaftrohrs (22) in den Eingriff mit einem Lenkervorbau (24) des Fahrrads, wobei die Kupplung (143) umfasst:
einen Spreizdübel (26) nach einem der Ansprüche 1 bis 5.

8. Baugruppe nach Anspruch 7, wobei der obere Keil (52) des Spreizdübels (26) einen oberen Keilkörper (71) aufweist, der sich von einem verjüngten oberen Keilkopf (70) erstreckt.

9. Baugruppe nach Anspruch 8, wobei der obere Keilkörper (71) eine Keilkörperinnenwand (72) mit Körpergleitflächen (80) aufweist, die sich in der Längsrichtung darauf erstrecken, und wobei der untere Keil (58) ferner eine untere Keilrückwand (108) mit abgewinkelten Wandabschnitten (110) aufweist, die mit den Körpergleitflächen (80) komplementär sind, sodass bei einer Verschiebung des unteren Keils (58), durch Drehung des Bolzens (62), die untere Keilrückwand (108) entlang der Körpergleitflächen (80) gleitet.

10. Baugruppe nach Anspruch 7, wenn direkt oder indirekt von Anspruch 4 abhängig, wobei der untere Abschnitt (40) des Gabelschaftrohrs (22) einen kreisförmigen Querschnitt hat und das Gabelschaftrohr (22) einen mittleren Abschnitt (42) aufweist, der sich zwischen dem oberen Abschnitt (30) und dem unteren Abschnitt (40) erstreckt, und wobei sich der mittlere Abschnitt (43) bei der Erstreckung von dem unteren Abschnitt (40) zu dem oberen Abschnitt (30) verjüngt.

11. Baugruppe nach Anspruch 7 oder einem der vorstehenden Ansprüche, der direkt oder indirekt von Anspruch 7 abhängig ist, wobei die Rückwand (25) des Gabelschaftrohrs (22) eine Krümmung aufweist, die größer als die Krümmung der Seitenwände (27, 29) des Gabelschaftrohrs (22) ist.

12. Baugruppe nach Anspruch 7 oder einem der vorstehenden Ansprüche, der direkt oder indirekt von Anspruch 7 abhängig ist, wobei die Kupplung (143) ferner eine Mehrzahl von Ausgleichsblechen (130, 132) umfasst, die zwischen den Seitenwänden (27, 29) des Gabelschaftrohrs und einer Vorbauinnenwand des Lenkervorbaus (24) positionierbar sind.

13. Baugruppe nach Anspruch 12, wobei die Mehrzahl von Ausgleichsblechen ein erstes Ausgleichsblech (130) und ein zweites Ausgleichsblech (132) aufweist, und wobei jedes des ersten Ausgleichsblechs und des zweiten Ausgleichsblechs aufweist:
(i) einen Kabelkanal (148) zum Ermöglichen des Hindurchführens eines oder mehrerer Kabel zwischen der ersten und der zweiten Seitenwand und der Vorbauinnenwand (124); oder
(ii) eine Ausgleichsblechaußenwand (135) mit im Wesentlichen der gleichen Krümmung wie die Rückwand (25) des Gabelschaftrohrs (22).

14. Baugruppe nach Anspruch 13, Teil (ii), wobei das erste Ausgleichsblech (130) zur Anlage an der ersten Seitenwand (27) kommt und das zweite Ausgleichsblech (132) zur Anlage an der zweiten Seitenwand (29) kommt.

15. Baugruppe nach Anspruch 14, wobei die Kupplung (124) ferner einen Ausgleichsblechring (142) umfasst, der zumindest teilweise unter den Ausgleichsblechen (130, 132) positionierbar ist; und wobei wahlweise oder vorzugsweise
jedes Ausgleichsblech einen Ausgleichsblechschenkel (138) aufweist, der sich von einem Ausgleichsblechboden erstreckt, und wobei der Ausgleichsblechschenkel auf dem Ausgleichsblechring (142) aufliegt.

## Revendications

1. Bouchon d'élargissement (26) destiné à être mis en prise avec un tube de guidon non circulaire (22) d'une bicyclette, le bouchon d'élargissement comprenant :
un boulon (62) mis en prise par vissage avec une clavette inférieure (58) de sorte qu'une rotation du boulon (62) assure une translation longitudinale de la clavette inférieure (58), la clavette inférieure (58) présentant une pluralité de surfaces de glissement de clavette inférieure inclinées (106) ;
un capuchon de tête (60) pouvant être fixé au boulon (62) par vissage ;
une clavette supérieure (52) présentant une pluralité de surfaces de glissement de clavette supérieure inclinées (74) et une ouverture de boulon (76) pour recevoir le boulon (62) à travers celle-ci ;
une pluralité de clavettes latérales (54, 56), chaque clavette latérale présentant une paroi de clavette intérieure supérieure inclinée (85) et une paroi de clavette intérieure inférieure inclinée (87) ; et
une fixation flexible (64) positionnée autour de la pluralité de clavettes latérales (54, 56) afin de comprimer la pluralité de clavettes latérales vers l'intérieur en direction du boulon (62) ;
dans lequel les parois de clavette intérieure supérieures (85) des clavettes latérales viennent en butée de manière coulissante contre les surfaces de glissement de clavette supérieures (74), et les parois de clavette intérieure inférieures (87) des clavettes latérales viennent en butée de manière coulissante contre les surfaces de glissement de clavette inférieure (106) de telle sorte qu'une translation vers le haut de la clavette inférieure (58) en direction de la clavette supérieure (52), par l'intermédiaire d'une rotation du boulon (62), assure un débattement radial vers l'extérieur de chaque clavette latérale (54, 56) par rapport au boulon (62), et une translation vers le bas de la clavette inférieure (58) s'éloignant de la clavette supérieure (52), par l'intermédiaire d'une rotation opposée du boulon (62), assure un débattement radial vers l'intérieur de chaque clavette latérale (54, 56).

2. Bouchon d'élargissement selon la revendication 1, dans lequel la clavette supérieure (52) comprend en outre une interface conique (78) pour recevoir une portion effilée du boulon (62).

3. Bouchon d'élargissement selon la revendication 1 ou selon la revendication 2, dans lequel chaque clavette latérale (54, 56) comprend un canal de boulon (88) s'étendant le long de la paroi de clavette intérieure supérieure et de la paroi de clavette intérieure inférieure, le canal de boulon (88) étant prévu pour encercler le boulon (62) au moins en partie.

4. Bouchon d'élargissement selon la revendication 3, dans lequel la pluralité de clavettes latérales comprend une première clavette latérale (54) et une seconde clavette latérale (56) .

5. Bouchon d'élargissement selon l'une quelconque des revendications précédentes, dans lequel la paroi de clavette intérieure supérieure (85) de chaque clavette latérale (54, 56) est complémentaire aux surfaces de glissement de clavette supérieure (74), et la paroi de clavette intérieure inférieure (87) de chaque clavette latérale (54, 56) est complémentaire aux surfaces de glissement de clavette inférieure (106).

6. Bouchon d'élargissement selon l'une quelconque des revendications précédentes, dans lequel la clavette supérieure (52) comprend un corps de clavette supérieure (71) s'étendant à partir d'une tête de clavette supérieure effilée (70), et dans lequel le corps de clavette supérieure (71) comprend des surfaces de glissement de corps (80) s'étendant de façon longitudinale le long d'une paroi intérieure de corps de clavette (72), et la clavette inférieure (58) comprend en outre une paroi arrière de clavette inférieure (108) présentant des portions de paroi inclinées (110) qui sont complémentaires aux surfaces de glissement de corps (80) de sorte que pendant une translation de la clavette inférieure (58), par l'intermédiaire d'une rotation du boulon (62), la paroi arrière de clavette inférieure (108) glisse le long des surfaces de glissement de corps (80).

7. Ensemble pour bicyclette, comprenant :
un tube de guidon (22) configuré pour être inséré dans un tube de direction (18) d'une bicyclette, le tube de guidon (22) comprenant :
une portion inférieure (40) servant à la fixation à une fourche de bicyclette (20) ; et
une portion supérieure allongée (30) présentant une paroi avant (23), une paroi arrière (25), une première paroi latérale (27) et une seconde paroi latérale (29), dans lequel la portion supérieure (30) présente une section transversale non circulaire ; et
un coupleur (143) pour mettre en prise le tube de guidon (22) avec une potence (24) de la bicyclette, le coupleur (143) comprenant :
un bouchon d'élargissement (26) selon l'une quelconque des revendications 1 à 5.

8. Ensemble selon la revendication 7, dans lequel la clavette supérieure (52) du bouchon d'élargissement (26) comprend un corps de clavette supérieure (71) s'étendant à partir d'une tête de clavette supérieure effilée (70).

9. Ensemble selon la revendication 8, dans lequel le corps de clavette supérieure (71) comprend une paroi intérieure de corps de clavette (72) présentant des surfaces de glissement de corps (80) s'étendant de façon longitudinale sur celle-ci, et la clavette inférieure (58) comprend en outre une paroi arrière de clavette inférieure (108) présentant des portions de paroi inclinées (110) qui sont complémentaires aux surfaces de glissement de corps (80) de sorte que pendant une translation de la clavette inférieure (58), par l'intermédiaire d'une rotation du boulon (62), la paroi arrière de clavette inférieure (108) glisse le long des surfaces de glissement de corps (80).

10. Ensemble selon la revendication 7 dans la mesure où elle dépend directement ou indirectement de la revendication 4, dans lequel la portion inférieure (40) du tube de guidon (22) présente une section transversale circulaire et le tube de guidon (22) comprend une portion centrale (42) s'étendant entre la portion supérieure (30) et la portion inférieure (40), et dans lequel la portion centrale (42) s'effile à mesure qu'elle s'étend de la portion inférieure (40) à la portion supérieure (30).

11. Ensemble selon la revendication 7, ou selon l'une quelconque des revendications précédentes qui dépend directement ou indirectement de la revendication 7, dans lequel la paroi arrière (25) du tube de guidon (22) présente une courbure qui est supérieure à la courbure des parois latérales (27, 29) du tube de guidon (22).

12. Ensemble selon la revendication 7, ou selon l'une quelconque des revendications précédentes qui dépend directement ou indirectement de la revendication 7, dans lequel le coupleur (143) comprend en outre une pluralité de cales (130, 132) positionnables entre les parois latérales de tube de guidon (27, 29) et une paroi intérieure de tige de la potence (24).

13. Ensemble selon la revendication 12, dans lequel la pluralité de cales comprend une première cale (130) et une seconde cale (132), et dans lequel chacune de la première cale et de la seconde cale comprend :
(i) un canal de câble (148) pour permettre le passage d'un ou de plusieurs câbles entre la première et la seconde paroi latérale et la paroi intérieure de tige (124) ; ou
(ii) une paroi extérieure de cale (136) présentant substantiellement la même courbure que la paroi arrière (25) du tube de guidon (22).

14. Ensemble selon la revendication 13 paragraphe (ii), dans lequel la première cale (130) vient en butée contre la première paroi latérale (27), et la seconde cale (132) vient en butée contre la seconde paroi latérale (29).

15. Ensemble selon la revendication 14, dans lequel le coupleur (143) comprend en outre une rondelle d'ajustage (142) positionnable au moins partiellement sous les cales (130, 132) ; et en option ou de préférence
dans lequel chaque cale comprend une patte de cale (138) qui s'étend à partir d'un fond de cale, et dans lequel la patte de cale repose sur la rondelle d'ajustage (142).
